# EUROPEAN PATENT APPLICATION

(11) **EP 4 557 415 A1**
(43) Date of publication of application: **21.05.2025**
(21) Application number: 23907755.5
(22) Date of filing: 20.12.2023
(51) Int. Cl.: H01M 10/04

(54) **APPARATUS AND METHOD FOR REFORM OF ELECTRODE ASSEMBLY**

(30) Priority: 20.12.2022 KR 20220179765; 19.12.2023 KR 20230186226
(71) Applicant: LG Energy Solution, Ltd., Seoul 07335 (KR)
(72) Inventor: KWON, Ki-Sun, Daejeon 34122 (KR); KIM, Min-Ki, Daejeon 34122 (KR); LEE, Kyoung-Ho, Daejeon 34122 (KR)
(74) Representative: Goddar, Heinz J.
(86) International application number: PCT/KR2023/021153
(87) International publication number: WO 2024/136472

(57) **Abstract**

Provided are a reforming device and a reforming method which may reduce reforming process defects. A reforming device according to the present disclosure includes a reforming pin unit including a reforming pin configured to be inserted into a hollow portion of an electrode assembly and a driving unit configured to perform a forward/backward and raising/lowering operation of the reforming pin, and a rotating unit configured to rotate the electrode assembly around an axial direction of the hollow portion.

## Description

### TECHNICAL FIELD

The present disclosure relates to a reforming device and a reforming method of an electrode assembly, and more particularly, to a reforming device and a reforming method of a jelly-roll type electrode assembly for a cylindrical secondary battery. The present application claims priority to Korean Patent Application Nos. 10-2022-0179765 and 10-2023-0186226, respectively filed on December 20, 2022 and December 19, 2023 in the Republic of Korea, the disclosures of which are incorporated herein by reference.

### BACKGROUND ART

As technology development and demand for mobile devices have increased, the demand for secondary batteries as energy sources have increased rapidly, and among secondary batteries, lithium secondary batteries with high energy density and discharge voltage have been studied a lot, commercialized, and widely used.

According to a shape of a battery case, secondary batteries are classified into cylindrical batteries and prismatic barriers in which an electrode assembly is embedded in a cylindrical or rectangular metal can, and pouch-type batteries in which an electrode assembly is embedded in a pouch-type case of an aluminum laminate sheet.

Also, an electrode assembly mounted inside a battery case is a power generating element capable of charging and discharge and having a stacked structure of a positive electrode, a separator, and a negative electrode. The electrode assembly is classified into a jelly-roll type wound with a separator interposed between a positive electrode and a negative electrode which are long sheet-shaped and are coated with active materials, a stack type in which a plurality of positive electrodes and negative electrodes of a predetermined size are sequentially stacked with a separator interposed therebetween, and a stack/folding type in which stack-type unit cells are wound with a long separation film. Among them, the jelly-roll type electrode assembly is the easiest to manufacture and has the advantage of high energy density per weight.

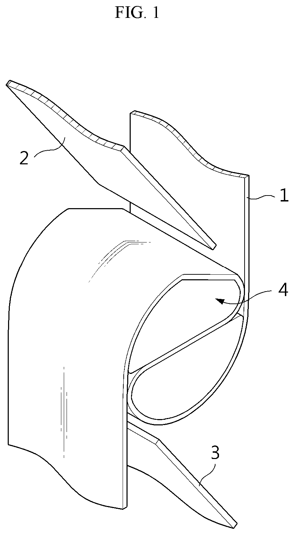

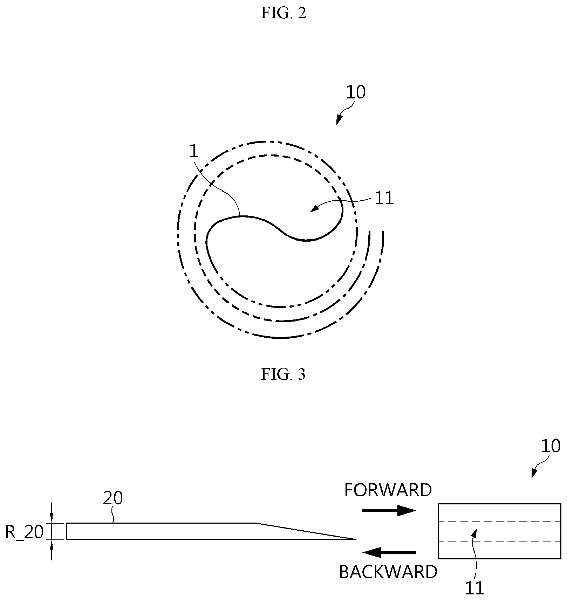

FIG. 1 is a view illustrating a state where a mandrel is wound with a separator interposed in a winding process of a conventional jelly-roll type electrode assembly. FIG. 2 is a view mainly illustrating the separator in the conventional jelly-roll type electrode assembly in a state where the mandrel is separated after winding of the conventional jelly-roll type electrode assembly.

Referring to FIG. 1, a jelly-roll type electrode assembly is manufactured by interposing a separator 1 between a positive electrode 2 in which a positive electrode active material is applied to an aluminum foil and a negative electrode 3 in which a negative electrode active material is applied to a copper foil and then winding them into a cylindrical shape. In particular, a winding process is performed by first winding, by using a mandrel 4 that is separated into the two portions, the separator 1 interposed between the two portions of the mandrel 4, winding the positive electrode 2 and the negative electrode 3 together, and then removing the mandrel 4.

An electrode assembly 10 discharged by separating the mandrel 4 after wound into a cylindrical jelly-roll type has a hollow portion 11 formed at a central portion where the mandrel 4 is removed. As shown in FIG. 1, because the separator 1 is first wound around the mandrel 4 and then the positive electrode 2 and the negative electrode 3 are wound, the separator 1 remains in the hollow portion 11 in such a shape as shown in FIG. 2. The separator 1 remains at the center of the hollow portion 11 to divide the hollow portion 11. Because the separator 1 remaining in the hollow portion 11 of the electrode assembly 10 interferes with the insertion of a resistance welding rod during a subsequent assembly process, the separator 1 in the hollow portion 11 is organized by performing a reforming process after the winding process.

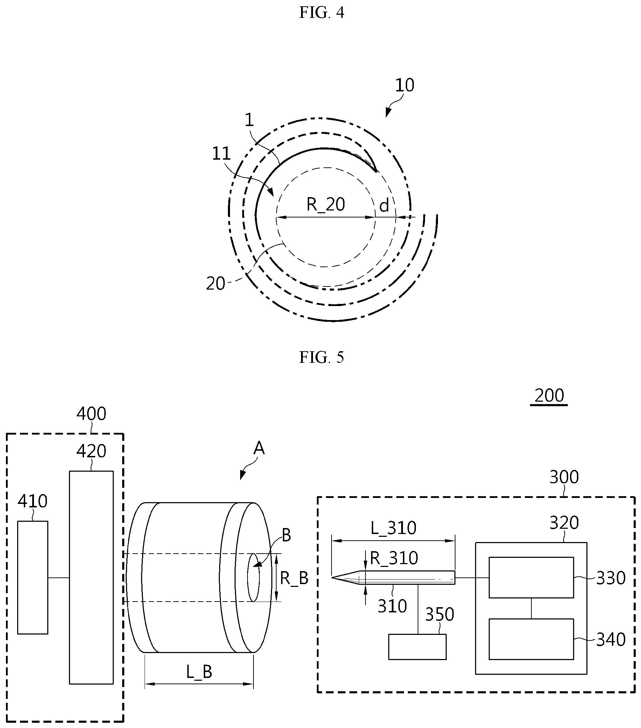

FIGS. 3 and 4 are views for describing a reforming process of a jelly-roll type electrode assembly.

Referring to FIGS. 3 and 4, a conventional reforming process is performed by inserting a reforming pin 20, which is heated, into the hollow portion 11 of the electrode assembly 10 and pushing the separator 1 remaining in the hollow portion 11 toward an inner wall of the hollow portion 11. That is, the conventional reforming process is a method of inserting the reforming pin 20, to which heat is applied, into the hollow portion 11 to displace the separator 1 remaining in the hollow portion 11 to the inner wall of the hollow portion 11.

In particular, a specific process order includes heating the reforming pin 20 (step 1), performing reforming by moving the reforming pin 20 forward and pushing the reforming pin 20 into the hollow portion 11 (step 2), and moving the reforming pin 20 backward (step 3).

However, when an outer diameter R_20 of the reforming pin 20 used in the conventional reforming process increases, a frictional force with the separator 1 may increase during insertion or removing of the reforming pin 20, resulting in damage to the separator 1. Accordingly, as shown in FIG. 4, in the conventional reforming process, a gap d between the reforming pin 20 and the inner wall of the hollow portion 11 should be secured when the reforming pin 20 is inserted into the hollow portion 11. That is, reforming is performed in a state where the reforming pin 20 does not contact the inner wall of the hollow portion 11.

Accordingly, in a non-contact state, the process is performed so that heat of the reforming pin 20 is transferred and the separator 1 remaining in the hollow portion 11 is displaced to the inner wall of the hollow portion 11 so as not to be lifted. However, in a non-contact manner, it is difficult for the remaining separator 1 to be completely in close contact with the inner wall of the hollow portion 11 so that a shape of the hollow portion 11 is close to a cylindrical shape. In the conventional non-contact reforming process, there are frequent situations where process results are judged to be defective.

### DISCLOSURE

### Technical Problem

The present disclosure is designed to solve the problems of the related art, and therefore the present disclosure is directed to providing a reforming process that may reduce reforming process defects.

The present disclosure is also directed to providing a reforming method that may reduce reforming process defects.

However, the problems to be solved by the present disclosure are not limited thereto, and other unmentioned technical problems will be understood by one of ordinary skill in the art from the following description of the present disclosure.

### Technical Solution

In one aspect of the present disclosure, a reforming device includes a reforming pin unit and a rotating unit.

The reforming pin unit includes a reforming pin configured to be inserted into a hollow portion of an electrode assembly and a driving unit configured to perform a forward/backward and a raising/lowering operation of the reforming pin.

The rotating unit is configured to rotate the electrode assembly around an axial direction of the hollow portion.

In the present disclosure, an outer diameter of the reforming pin is less than an inner diameter of the hollow portion.

Preferably, the electrode assembly is formed by winding a long sheet-shaped stack having a structure of a positive electrode, a separator, and a negative electrode to have the hollow portion at a central portion, the separator protruding from an inner wall of the hollow portion, wherein the reforming pin is inserted into the hollow portion while being spaced apart from the inner wall of the hollow portion.

The reforming pin is inserted into the hollow portion and then is raised/lowered to closely attach the separator to the inner wall of the hollow portion to perform reforming.

After the reforming ends, the reforming pin is lowered/raised to move away from the inner wall of the hollow portion and then taken out from the hollow portion.

In an embodiment, the driving unit includes a first actuator connected to one side of the reforming pin to perform the forward/backward operation, and a second actuator connected to the first actuator to perform the raising/lowering operation.

Also, the rotating unit has a turntable structure rotated by driving a motor.

In another aspect of the present disclosure, a reforming method includes heating a reforming pin, moving the reforming forward into a hollow portion of a jelly-roll type electrode assembly, raising/lowering the reforming pin in the hollow portion, rotating the electrode assembly in a state where the reforming pin is located in the hollow portion, lowering/raising the reforming pin in the hollow portion, and moving the reforming pin backward from the hollow portion.

In one aspect of the present disclosure, a reforming method includes inserting a reforming pin, to which heat is applied, into a hollow portion of an electrode assembly in a non-contact manner, moving the reforming pin to contact to an inner wall of the hollow portion and then rotating the electrode assembly around an axial direction of the hollow portion, and moving the reforming pin away from the inner wall of the hollow portion.

The reforming methods may be performed by using the reforming device according to the present disclosure.

### Advantageous Effects

The present disclosure proposes a method of inserting a reforming pin, to which heat is applied, into a hollow portion of an electrode assembly, closely attaching a separator to a wall surface of the hollow portion by moving the reforming pin, and then fixing the separator by moving the electrode assembly. Accordingly, according to the present disclosure, a conventional non-contact heating reforming method may be improved. According to the present disclosure, reforming quality is improved.

A reforming device of the present disclosure is capable of moving a reforming pin to move forward and backward, and is configured to raise/lower the reforming pin, rotate an electrode assembly, and lower/raise the reforming pin between the forward and backward movement of the reforming pin. In a reforming method using the reforming device, the reforming pin may be inserted into a hollow portion of the electrode assembly without interference and then a separator may be closely attached to an inner wall of the hollow portion. Because the electrode assembly rotates even when the reforming pin does not move in a state where the separator is closely attached to the inner wall of the hollow portion, reforming is performed in a contact manner along an inner diameter of the hollow portion. Then, the reforming pin may be taken out from the hollow portion without interference.

According to the present disclosure, because the reforming pin does not contact the inner wall of the hollow portion of the electrode assembly when the reforming pin is inserted and taken out, there are no defects such as damage to the separator or a part of the separator being pulled out of the electrode assembly.

When the present disclosure is applied, because reforming defects may be reduced and batch reforming is possible, the productivity of the electrode assembly may be increased.

According to the present disclosure, the shape of the hollow portion of the electrode assembly may be improved and defects such as damage to the separator may be minimized.

Also, because the reforming pin of the present disclosure may be implemented while maintaining basic specifications of a conventional reforming pin, a separate reforming pin does not need to be designed and processability equal to or better than that of the existing reforming pin may be ensured.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is a view illustrating a state where a mandrel is wound with a separator interposed in a winding process of a conventional jelly-roll type electrode assembly.
FIG. 2 is a view mainly illustrating the separator in the conventional jelly-roll type electrode assembly in a state where the mandrel is separated after winding of the conventional jelly-roll type electrode assembly.
FIGS. 3 and 4 are views for describing a reforming process of a jelly-roll type electrode assembly.
FIG. 5 is a schematic view illustrating a reforming device according to an embodiment of the present disclosure.
FIG. 6 is a view illustrating a stacked state before winding of a jelly-roll type electrode assembly to be reformed and a winding process in the present disclosure.
FIG. 7 illustrates a structure of an electrode plate shown in FIG. 6.
FIG. 8 is a flowchart illustrating a reforming method according to an embodiment of the present disclosure.
FIG. 9 is a view illustrating states of an electrode assembly and a reforming pin at each step in a reforming device according to the present disclosure when the method of FIG. 8 is performed.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The same reference numerals denote the same elements. Also, in the drawings, thicknesses, ratios, and dimensions of elements are exaggerated for effective explanation of technical content.

FIG. 5 is a schematic view illustrating a reforming device according to an embodiment of the present disclosure.

The present disclosure proposes a method of inserting a reforming pin, to which heat is applied, into a hollow portion of an electrode assembly, closely attaching a separator to a wall surface of the hollow portion, and then fixing the separator. The reforming device of FIG. 5 is configured to perform the method.

Referring to FIG. 5, a reforming device 200 includes a reforming pin unit 300 and a rotating unit 400. The reforming device 200 is for reforming an electrode assembly A that is a cylindrical jelly-roll type electrode assembly.

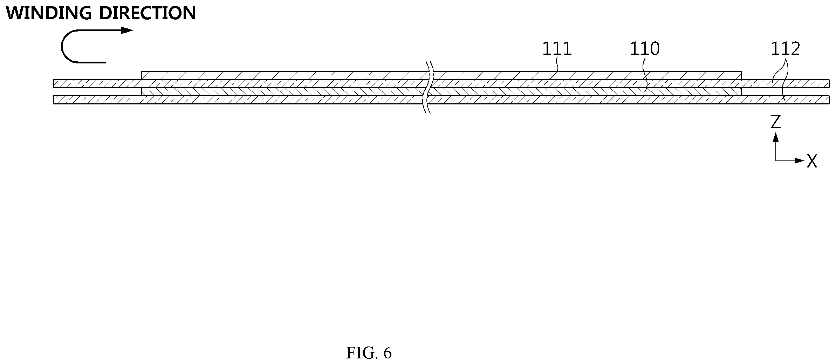

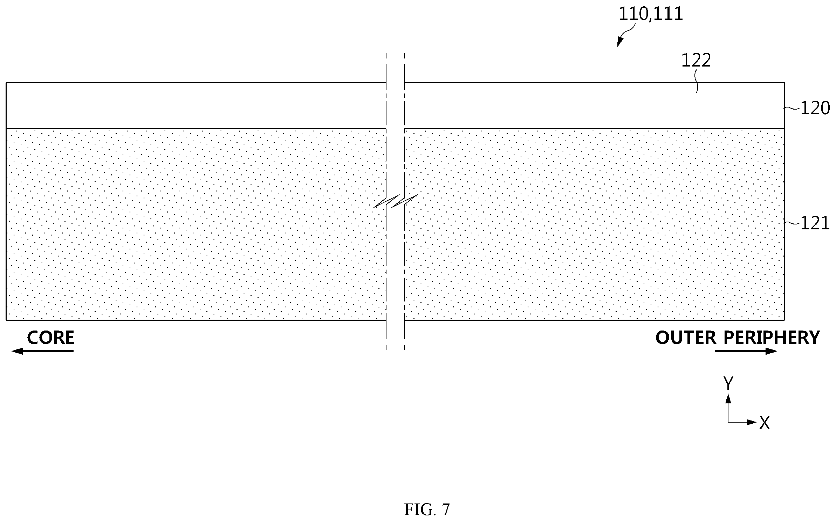

FIG. 6 is a view illustrating a stacked state before winding of a jelly-roll type electrode assembly to be reformed and a winding process in the present disclosure. FIG. 7 illustrates a structure of an electrode plate shown in FIG. 6.

Referring to FIG. 6, the electrode assembly A may be manufactured by winding, in one direction X, a stack that is formed by sequentially stacking a separator 112, a positive electrode plate 110, a separator 112, and a negative electrode plate 111 at least once.

In this case, as shown in FIG. 7, each of the positive electrode plate 110 and the negative electrode plate 111 may have a structure in which an active material layer 121 is formed on a current collector 120 having a long sheet shape, and an uncoated portion 122 in which the active material layer 121 is not formed may be included in a partial area of the current collector 120.

Referring to FIG. 7, each of the positive electrode plate 110 and the negative electrode plate 111 has a structure in which the active material layer 121 is coated on the current collector 120 having a sheet shape and includes the uncoated portion 122 in which an active material is not coated on one long side along the winding direction X. In the direction (X direction) along the long side of the current collector 120, one side becomes a core and the other side becomes an outer periphery.

The electrode assembly A is manufactured by sequentially stacking the positive electrode plate 110 and the negative electrode plate 111 together with two separators 112 as shown in FIG. 6 and then winding them in one direction X from the core. In this case, the uncoated portions of the positive electrode plate 110 and the negative electrode plate 111 are arranged opposite to each other along a direction (Y direction) along a short side of the current collector 120.

A hollow portion B like the hollow portion 11 shown in FIG. 2 is formed at a central portion, that is, the inner core, of the electrode assembly A manufactured by using the method of FIG. 6. After the winding process, the uncoated portion of the positive electrode plate 110 and the uncoated portion of the negative electrode plate 111 may be bent toward the core. Next, a current collecting plate may be connected to the uncoated portion. Because the current collecting plate has a larger cross-sectional area than a strip-type electrode tab and resistance is inversely proportional to the cross-sectional area of a path through which current flows, when a secondary battery is formed in the above structure, cell resistance may be greatly reduced. When the positive electrode plate 110 and the negative electrode plate 111 each including the uncoated portion 122 are used, without a separate electrode tab, a battery having a tab-less structure in which at least a part of the uncoated portion 122 of each of the positive electrode plate 110 and the negative electrode plate 111 defines an electrode tab may be implemented.

The separator 112 remaining in a shape as shown in FIG. 2 may be formed in the hollow portion B. The present disclosure proposes the reforming processing and the reforming device 200 for forming the hollow portion B into a cylindrical shape by organizing the remaining separator 112 that divides the hollow portion B.

Referring back to FIG. 5, the reforming pin unit 300 includes a reforming pin 310 that may be inserted into the hollow portion B of the electrode assembly A and a driving unit 320 configured to perform a forward/backward and raising/lowering operation of the reforming pin 310.

The driving unit 320 provides a driving force for the forward/backward and raising/lowering operation of the reforming pin 310. The driving unit 320 may include a motor or a cylinder that operates by applied power and signals, and when the driving unit 320 includes a motor, the driving unit 320 may further include a power transmitting means (e.g., a bearing, a gear, a belt, or a chain) for transmitting power of the motor to the reforming pin 310. More preferably, the driving unit 320 includes a cylinder that operates by applied power and signals and whose moving distance may be finely adjusted, and an end of a rod provided in the cylinder is detachably connected to the reforming pin 310.

For example, the driving unit 320 may include a first actuator 330 and a second actuator 340. The first actuator 330 and the second actuator 340 may include a hydraulic cylinder or a pneumatic cylinder. In another example, the first actuator 330 and the second actuator 340 may be an electric element that moves the rod forward and backward by using an electrical signal. In another example, the first actuator 330 and the second actuator 340 may include a servo motor and a linear motion conversion mechanism. The linear motion conversion mechanism may be a rack/pinion that converts a rotational motion into a linear motion.

The first actuator 330 is connected to one side of the reforming pin 310 and performs a forward/backward operation. The first actuator 330 may reciprocate. When the first actuator 330 operates, the reforming pin 310 may move forward and backward.

The second actuator 340 is connected to the first actuator 330 and performs a raising/lowering operation. The second actuator 340 may reciprocate. When the second actuator 340 operates, the first actuator 330 and the reforming pin 310 connected to the first actuator 330 may be raised/lowered.

It is preferable that the first actuator 330 and the second actuator 340 include a pneumatic cylinder capable of precise control using pneumatic pressure. When the driving unit 320 is an air device driving type unit, the driving unit 320 may further include an air compressor for supplying pneumatic pressure to an air cylinder of the first actuator 330 and the second actuator 340, and the air cylinder of the first actuator 330 and the second actuator 340 may be connected to the air compressor to maintain or discharge pneumatic pressure. The air cylinder may operate by operating pneumatic pressure whose supply is controlled through a pneumatic pressure pipe by a control signal of a controller to perform a forward/backward and raising/lowering operation of the reforming pin 310 connected to the end of the rod by moving the rod backward/forward.

A sensor for detecting a forward/backward and raising/lowering state of the reforming pin 310 may be further included in the reforming pin unit 300. The sensor may detect a forward/backward and raising/lowering state of the reforming pin 310 and may output a signal to the controller, and the controller may control operations of the first actuator 330 and the second actuator 340 according to the input signal.

The rotating unit 400 is configured to rotate the electrode assembly A around an axial direction of the hollow portion B. While the electrode assembly A is rotated by the rotating unit 400, the center of the hollow portion B of the electrode assembly A is located in place. The rotating unit 400 may have a structure of a turntable 420 rotated by driving the motor 410. When the electrode assembly A is mounted on the turntable 420 and the motor 410 is driven, the rotating unit 400 may rotate the electrode assembly A. In particular, the electrode assembly A may be rotated in place in a state where the reforming pin 310 is located in place in the hollow portion B. The rotating unit 400 may further include a jig (not shown) so that the electrode assembly A is fixed to the turntable 420 and rotates when the turntable 420 rotates. For example, the motor 410, which is a servo motor, may be mounted on a base (not shown), and the turntable 420 may be connected to a shaft of the motor 410. The turntable 420 may change a rotation speed in various ways by controlling the motor 410.

The rotating unit 400 may further include a sensor for detecting a mounted state of the electrode assembly A and driving the motor 410. A reforming processing may be stably performed by allowing the motor 410 to begin to operate when it is detected that the reforming pin 310 contacts an inner wall of the hollow portion B.

The reforming pin unit 300 may further include a heating means 350 for heating the reforming pin 310 to a temperature at which reforming is possible. The heating means 350 may include a power source and a heater in the reforming pin 310. Instead, the heating means 350 may include a heating element that heats the reforming pin 310 in a thermal contact manner with the reforming pin 310.

The reforming pin 310 has a rod shape that is long in one direction. The reforming pin 310 has a straight central axis along a longitudinal direction thereof and is not bent. A longitudinal cross-section of the reforming pin 310 perpendicular to the longitudinal direction may be substantially circular. The center of the longitudinal cross-section at any part may be constant without being displaced along the longitudinal direction. That is, a circumferential shape of the reforming pin 310 may be substantially circular so that the hollow portion B of the electrode assembly A is cylindrical.

A front end of the reforming pin 310 may be formed in a sharp shape, and the remaining body of the reforming pin 310 connected to the front end may have a cylindrical shape. For example, the reforming pin 310 may have an inclined cut surface on a front cross-section in a cross-section along the longitudinal direction. The front end of the reforming pin 310 may have a shape different from that described and illustrated herein.

Also, the reforming pin 310 may be inserted into the hollow portion B of the electrode assembly A by an insertion depth equal to or greater than a length L_B of the hollow portion B of the electrode assembly A. Accordingly, the cylindrical body of the reforming pin 310 may be positioned to extend from one end to the other end of the hollow portion B. The front end of the reforming pin 310 may be rounded to prevent the separator 112 from being scratched when the reforming pin 310 is inserted into the hollow portion B of the electrode assembly A. In order to insert the reforming pin 310 into the hollow portion B of the electrode assembly A to a sufficient insertion depth, a groove in which the front end of the reforming pin 310 is accommodated or a through-hole through which the front end of the reforming pin 310 passes may be formed in the turntable 420 of the rotating unit 400.

An outer diameter R_310 of the reforming pin 310, specifically, an outer diameter of the body, is less than an inner diameter R_B of the hollow portion B of the electrode assembly A. The outer diameter R_310 of the reforming pin 310 has a size that allows the reforming pin 310 to be inserted into the hollow portion B while being spaced apart from the inner wall of the hollow portion B. That is, the reforming pin 310 is inserted into the hollow portion B in a non-contact manner. The reforming pin 310 may be inserted into a position substantially the same as the center of the hollow portion B. Because the reforming pin 310 is inserted in a non-contact manner, the separator 112 in the hollow portion B is not rolled up along the reforming pin 310 or is not pushed out of the hollow portion B.

The reforming pin 310 may be formed of a metallic material to easily transmit heat and may include a surface coating layer to reduce friction. The surface coating layer may be formed of, for example, but not limited to, a polyether ether ketone (PEEK) material. When the surface coating layer is formed of a PEEK material, the PEEK material is a thermoplastic resin with high strength, high rigidity, and excellent heat resistance, and thus the durability of the reforming pin 310 may be improved. Even when the remaining separator 112 protrudes in a Taegeuk pattern in the hollow portion B of the electrode assembly A, the reforming pin 310 may be inserted into the hollow portion B while minimizing friction between the separator 112 and the reforming pin 310.

The front end of the reforming pin 310 has a sharp shape for smooth insertion. Even when the remaining separator 112 protrudes in a Taegeuk pattern in the hollow portion B of the electrode assembly A, the front end having a sharp shape may be inserted into an empty space between portions of the separator 112 without contacting the separator 112. When the reforming pin 310 moves forward and is inserted into the hollow portion B up to the cylindrical body, the reforming pin 310 may contact the separator 112 that protrudes, but may be inserted without difficulty by pushing the separator 112 to a surrounding empty space.

The reforming pin 310 may move forward and may be inserted into the hollow portion B of the electrode assembly A, may contact the inner wall of the hollow portion by being raised/lowered in the hollow portion B, and then may closely attach the separator 112 remaining in the hollow portion B to the inner wall of the hollow portion B for reforming. That is, a reforming step using the reforming pin 310 is performed in a contact manner.

The reforming pin 310 is not deformed during use but may contact the inner wall of the hollow portion B through a raising/lowering operation by the driving unit 320. As such, in the present disclosure, the reforming pin 310 contacts the inner wall of the hollow portion B by being moved.

The reforming pin 310 does not contact the separator 112 by being expanded or bent. The reforming pin 310 contacts the separator 112 by being raised/lowered. Because the reforming pin 310 is not deformed, the consistency of the reforming process is excellent. Also, because the reforming pin 310 of the present disclosure may be implemented while maintaining basic specifications of a conventional reforming pin, a separate reforming pin does not need to be designed and processability equal to or greater than that of the existing reforming pin may be ensured. In addition, there is no need to provide reforming pins having various sizes according to the inner diameter of the hollow portion B of the electrode assembly A. Because the reforming pin 310 is inserted into the hollow portion B and contacts the inner wall of the hollow portion B by being raised/lowered, when the inner diameter of the hollow portion B changes, a contact area may change due to a radius of curvature difference with the reforming pin 310, but there is no need to replace the reforming pin 310 with a reforming pin of a different size.

In a state where the reforming pin 310 contacts the inner wall of the hollow portion B, the rotating unit 400 may rotate the electrode assembly A. By at least one rotation, the entire inner wall of the hollow portion B of the electrode assembly A contacts the reforming pin 310. While the electrode assembly A rotates, the reforming pin 310 may be fixed in position. During the reforming process, the reforming pin 310 is stopped and only the electrode assembly A moves. Because the electrode assembly A rotates even when the reforming pin 310 does not move, reforming may be performed in a contact manner along the inner diameter of the hollow portion B.

In a method of moving the reforming pin 310, because a trajectory of the reforming pin 310 is complex and varies from time to time, it is difficult to perform batch reforming. According to the present disclosure, because the reforming pin 310 does not move when contact reforming is performed, there is no change in trajectory and only the electrode assembly A rotates around the axial direction of the hollow portion B. In this rotation method, because movement is always constant compared to movement along 3 axes, it is easy to manage the reforming process and is excellent in maintaining reforming quality. Accordingly, when the present disclosure is applied, because reforming defects may be reduced and batch reforming may be performed, the productivity of the electrode assembly may be improved. According to the present disclosure, reforming process results may be constant every time and it is not difficult to set the process quality.

Also, because the reforming device 200 of the present disclosure may perform reforming in a contact manner, a conventional non-contact heating reforming process may be improved. Because the reforming pin 310 may contact the inner wall of the hollow portion B and directly contact the separator 112 to transfer heat, heat may be evenly transferred to all portions and reforming may be uniformly performed. According to the present disclosure, reforming quality may be improved.

After the reforming process ends, the reforming pin 310 may be lowered/raised and then may be taken out from the hollow portion B. For example, the reforming pin 310 that was raised may be lowered to a position roughly matching the center of the hollow portion B, that is, may return to its original position, and then may be taken out through a backward movement. In contrast, the reforming pin 310, which was lowered, may be raised to a position matching the center of the hollow portion B, that is, may return to its original position, and then may be taken out through a backward movement.

When the reforming device 200 is used, damage to the separator 112 in the hollow portion B of the electrode assembly A due to poor insertion may be prevented, reforming defects may be minimized, and reforming quality may be improved.

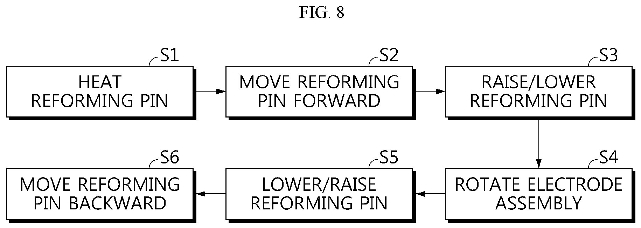

FIG. 8 is a flowchart illustrating a reforming method according to an embodiment of the present disclosure.

Referring to FIG. 8, a reforming method according to an embodiment of the present disclosure includes: step S1 of heating a reforming pin; step S2 of moving the reforming pin forward; step S3 of raising/lowering the reforming pin; step S4 of rotating an electrode assembly; step S5 of lowering/raising the reforming pin; and step S6 of moving the reforming pin backward.

Compared to the existing process including heating a reforming pin (step 1), moving the reforming pin forward (step 2), and moving the reforming pin backward (step 3) described with reference to FIG. 3, there is a difference in that the reforming method according to the present disclosure includes step S3 of raising/lowering the reforming pin, step S4 of rotating the electrode assembly, and step S5 of lowering/raising the reforming pin between step S2 of moving the reforming pin forward and step S6 of moving the reforming pin backward.

The reforming method may be performed by using the reforming device 200 according to the present disclosure.

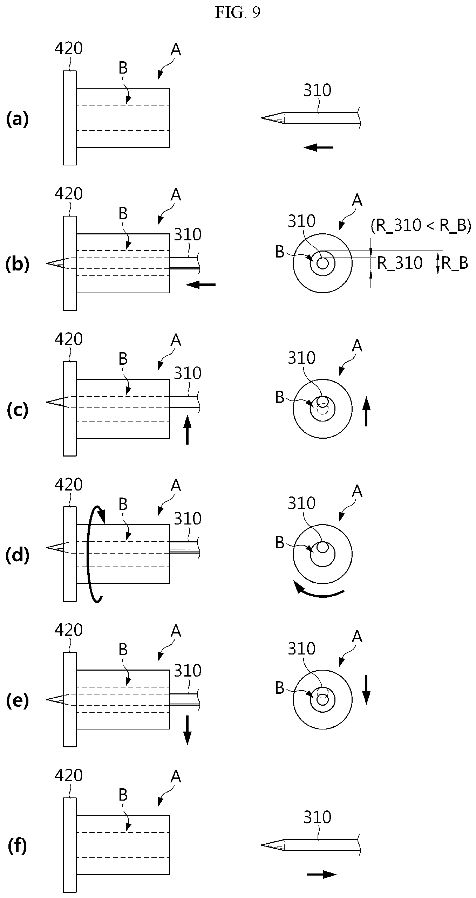

FIG. 9 is a view illustrating states of an electrode assembly and a reforming pin at each step in a reforming device according to the present disclosure when the method of FIG. 8 is performed. In FIG. 9, a relative position of the reforming pin 310 seen from a side surface of the electrode assembly A and a relative position of the reforming pin 310 seen from an end of the electrode assembly A at each step during a reforming process are simultaneously shown. In some drawings, some reference numerals are omitted.

A reforming method of the present disclosure will be described with reference to FIGS. 8 and 9.

First, as shown in (a) of FIG. 9, the electrode assembly A is mounted on the turntable 420 of the rotating unit 400 to be in a ready state. Next, the reforming pin 310 is heated (step S1).

Next, as shown in (b) of FIG. 9, the reforming pin 310 is moved forward into the hollow portion B of the electrode assembly A (step S2). In this case, this may be achieved by driving the first actuator 330 of the driving unit 320. The reforming pin 310 may be inserted into the center of the hollow portion B.

As described above, the outer diameter R_310 of the reforming pin 310 is less than the inner diameter R_B of the hollow portion B of the electrode assembly A. Also, even when the separator 112 having a Taegeuk pattern is formed on an inner wall of the hollow portion B, the reforming pin 310 may move forward and may be inserted into the hollow portion B while being spaced apart from the inner wall of the hollow portion B without causing significant strain on the separator 112. Accordingly, the separator 112 does not protrude to the opposite direction due to the reforming pin 310 in step S2 of moving the reforming pin forward. Because friction with the separator 112 does not occur when the reforming pin 310 is inserted, there is no fear that the separator 112 is damaged or torn.

Next, in step S3 of raising/lowering the reforming pin, the reforming pin 310 may closely attach the separator 112 remaining in the central portion of the hollow portion B to the inner wall of the hollow portion B. (c) of FIG. 9 illustrates an example where the reforming pin 310 is raised in the hollow portion B. Accordingly, unlike conventional reforming performed in a non-contact state, reforming according to the present disclosure may be performed in a contact state.

Because the cylindrical body of the reforming pin 310 is located in the hollow portion B and the reforming pin 310 extends along a longitudinal direction of the hollow portion B without being bent, the reforming pin 310 may evenly contact an wall surface of the hollow portion B in the longitudinal direction without any portion not being in contact.

Next, step S4 of rotating the electrode assembly A is performed in a state where the reforming pin 310 is located in the hollow portion B. (d) of FIG. 9 illustrates an example where the electrode assembly A is rotated clockwise. The electrode assembly A may be rotated by driving the motor 410 of the rotating unit 400.

Because the reforming pin 310 evenly attaches the separator 112 to the wall surface of the hollow portion B in the longitudinal direction of the hollow portion B without any portion not being in contact in step S3 and the electrode assembly A rotates in place in step S4, the separator 112 may be collectively reformed along the inner wall of the hollow portion B. The reforming pin 310 may evenly press the separator 112 over the entire circumference of the inner wall of the hollow portion B. The separator 112 is thermally deformed and displaced toward the inner wall of the hollow portion B. Accordingly, because the Taegeuk pattern as shown in FIG. 2 may be completely attached to the inner wall of the hollow portion B, a shape of the hollow portion B may be close to a cylindrical shape. In addition, due to the rotation of the electrode assembly A, the separator 112 on the inner wall of the hollow portion B may not be forcibly bent and folded, but may be rolled into a curved shape and neatly rolled around the inner wall. As such, according to the present disclosure, process defects may be reduced. Because reforming may be achieved with at least one rotation, a process time may be expected to be reduced.

Because forming of the Taegeuk pattern is sufficiently performed through the reforming process and the Taegeuk pattern does not remain in the hollow portion B, insertion of a resistance welding rod in a subsequent process is performed without interference, and furthermore, defects occurring during insertion of a center pin may be avoided. Accordingly, because insertion of the resistance welding rod or insertion of the center pin into the hollow portion B of the electrode assembly A during an assembly process may be smoothly performed and secondary defects due to a poor shape of the hollow portion B may be minimized, the production process yield of secondary batteries may be improved.

The reforming pin 310 may be fixed while the electrode assembly A rotates. Accordingly, a trajectory of the reforming pin 310 is not complex and there is no need to control the complex trajectory of the reforming pin 310.

Next, when step S5 of lowering/raising the reforming pin is performed, the reforming pin 310 moves away from the inner wall of the hollow portion B of the electrode assembly A. (e) of FIG. 9 illustrates an example where the reforming pin 310 is lowered in the hollow portion B.

Next, as shown in (f) of FIG. 9, step S6 of moving the reforming pin backward is performed. Because the outer diameter R_310 of the reforming pin 310 is less than the inner diameter R_B of the hollow portion B of the electrode assembly A, the process may end by taking out the reforming pin 310 from the hollow portion B without interference between the reforming pin 310 and the hollow portion B. While the reforming pin 310 is taken out, there is no friction with the separator 112, and thus, there is no fear that the separator 112 is damaged or torn. In the hollow portion B of the electrode assembly A that has been reformed, even when the separator 112 protrudes and divides the hollow portion B before reforming, the separator 112 may be completely attached to the inner wall of the hollow portion B due to the reforming and the hollow portion B having a cylindrical shape may be formed without damage to the electrode assembly A such as a tail out.

The reforming device 200 according to the present disclosure adds a raising/lowering operation of the reforming pin 310 compared to an existing reforming device in which the reforming pin 20 may move only forward and backward as described with reference to FIG. 3. The reforming device 200 according to the present disclosure includes the rotating unit 400, and the rotating unit 400 is not provided in the existing reforming device.

In summary, the reforming method of the present disclosure may include a step of heating a reforming pin; a step of moving the reforming pin forward; a step of raising the reforming pin; a step of rotating an electrode assembly; a step of lowering the reforming pin; and a step of moving the reforming pin backward. The method may be modified and performed as a method including a step of heating a reforming pin; a step of moving the reforming pin forward; a step of lowering the reforming pin; a step of rotating an electrode assembly; a step of raising the reforming pin; and a step of moving the reforming pin backward.

Also, another reforming method of the present disclosure may include a step of inserting the reforming pin 310, to which heat is applied, into the hollow portion B of the electrode assembly A in a non-contact manner; a step of contacting the reforming pin 310 to an inner wall of the hollow portion B by moving the reforming pin 310 and then rotating the electrode assembly A with respect to the reforming pin 310; a step of moving the reforming 310 away from the inner wall of the hollow portion B, and this method may also be performed by the reforming device 200.

As such, the present disclosure proposes a method of inserting the reforming pin 310, to which heat is applied, into the hollow portion B of the electrode assembly A, closely attaching the separator 112 to a wall surface of the hollow portion B by moving (raising/lowering) the reforming pin 310, and then fixing the separator 112 by moving (rotating) the electrode assembly A.

According to the present disclosure, contact between the reforming pin 310 and the inner wall of the hollow portion B may be made with only raising/lowering of the reforming pin 310 without deforming the reforming pin 310, without changing a shape of the reforming pin 310, and without increasing an outer diameter of the reforming pin 310. Because controllable contact is made only through mechanical movement, process management is easy and predictable, and because only a raising/lowering operation needs to be added to an existing forward/backward operation, the reforming device 200 may be simply implemented and process quality may be remarkably improved. Furthermore, reforming may be performed in a state where the reforming pin 310 evenly contacts the entire inner wall of the hollow portion B by rotating the electrode assembly A.

The reforming device 200 and the reforming method according to the present disclosure may be particularly usefully applied to a process of manufacturing a small cylindrical secondary battery having a form factor of 18650 or 21700. In addition, the reforming device 200 and the reforming method according to the present disclosure may also be applied to electrode assembly reforming for manufacturing a cylindrical secondary battery with an increased form factor. A cylindrical secondary battery with an increased form factor may be implemented as a tab-less cylindrical secondary battery as described with reference to FIGS. 6 and 7. An increase in a form factor results in increased energy density, increased safety against thermal runaway, and improved cooling efficiency.

Preferably, the reforming device 200 and the reforming method according to the present disclosure may be used in a process of reforming an electrode assembly for a cylindrical secondary battery in which a form factor ratio (a value obtained by dividing a diameter of a cylindrical secondary battery by a height, that is, a ratio of a diameter Φ to a height H) is greater than about 0.4. Such a secondary battery is suitable as a high-output, high-capacity secondary battery for HEV. Such a secondary battery may be, for example, a 46110 cell, a 48750 cell, a 48110 cell, a 48800 cell, or a 46800 cell. When the electrode assembly A is such an electrode assembly, the length L_B of the hollow portion B may be 65 mm or more and the inner diameter R_B of the hollow portion B may be 2 mm to 8 mm. The reforming pin 310 included in the reforming device 200 of the present disclosure may have the length L_310 and the outer diameter R_310 to be inserted into the hollow portion B without interference by considering the length I. B and the inner diameter R_B of the hollow portion B which may vary according to the form factor of the secondary battery.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, front, and back are used, these terms are only for convenience of explanation and may vary according to a position of a target object, a position of an observer, etc.

### (Reference Signs)

| | | | |
|---|---|---|---|
| 200 : | reforming device | 300 : | reforming pin unit |
| 310 : | reforming pin | 320 : | driving unit |
| 330 : | first actuator | 340 : | second actuator |
| 350 : | heating means | 400 : | rotating unit |
| 410 : | motor | 420 : | turntable |

## Claims

1. A reforming device comprising:
a reforming pin unit comprising a reforming pin configured to be inserted into a hollow portion of an electrode assembly and a driving unit configured to perform a forward/backward and a raising/lowering operation of the reforming pin; and
a rotating unit configured to rotate the electrode assembly around an axial direction of the hollow portion.

2. The reforming device according to claim 1, wherein an outer diameter of the reforming pin is less than an inner diameter of the hollow portion.

3. The reforming device according to claim 1, wherein the electrode assembly is formed by winding a long sheet-shaped stack having a structure of a positive electrode, a separator, and a negative electrode to have the hollow portion at a central portion, the separator protruding from an inner wall of the hollow portion,
wherein the reforming pin is inserted into the hollow portion while being spaced apart from the inner wall of the hollow portion.

4. The reforming device according to claim 3, wherein the reforming pin is inserted into the hollow portion and then is raised/lowered to contact the separator to the inner wall of the hollow portion to perform reforming.

5. The reforming device according to claim 4, wherein, after the reforming ends, the reforming pin is lowered/raised to move away from the inner wall of the hollow portion and then taken out from the hollow portion.

6. The reforming device according to claim 1, wherein the driving unit comprises:
a first actuator connected to one side of the reforming pin to perform the forward/backward operation; and
a second actuator connected to the first actuator to perform the raising/lowering operation.

7. The reforming device according to claim 1, wherein the rotating unit has a turntable structure rotated by driving a motor.

8. A reforming method comprising:
heating a reforming pin;
moving the reforming pin into a hollow portion of a jelly-roll type electrode assembly;
raising/lowering the reforming pin in the hollow portion;
rotating the electrode assembly in a state where the reforming pin is located in the hollow portion;
lowering/raising the reforming pin in the hollow portion; and
moving the reforming pin backward from the hollow portion.

9. A reforming method comprising:
inserting a reforming pin, to which heat is applied, into a hollow portion of an electrode assembly in a non-contact manner;
moving the reforming pin to contact to an inner wall of the hollow portion and then rotating the electrode assembly around an axial direction of the hollow portion; and
moving the reforming pin away from the inner wall of the hollow portion.
